# EUROPEAN PATENT APPLICATION

(11) **EP 2 153 851 A1**
(43) Date of publication of application: **17.02.2010**
(21) Application number: 07834927.1
(22) Date of filing: 11.04.2007
(51) Int. Cl.: A61L 2/14, C02F 1/46, C02F 1/48, H05H 1/24

(54) **METHOD FOR TREATING WATER AND AQUEOUS SOLUTIONS BY MEANS OF A GAS-DISCHARGE PLASMA AND A DEVICE FOR CARRYING OUT SAID METHOD**

(71) Applicant: Zayika, Olexandr Borisovich, Per. Stankostroiltelny, 3-36 Dnepropetrovsk 49008 (UA); Bakhar, Vasily Pavlovich, Ul. Sokolniki, 5 Nikolo-Uryupino Krasnogorsky raion Moskovskaya obl., 143421 (RU)
(72) Inventor: Zayika, Olexandr Borisovich, Per. Stankostroiltelny, 3-36 Dnepropetrovsk 49008 (UA); Bakhar, Vasily Pavlovich, Ul. Sokolniki, 5 Nikolo-Uryupino Krasnogorsky raion Moskovskaya obl., 143421 (RU)
(74) Representative: Manley, Nicholas Michael
(86) International application number: PCT/RU2007/000126
(87) International publication number: WO 2008/127135

(57) **Abstract**

Method of water and aqueous solution processing with plasma of combined impulse gas discharge induced and maintained above surface of flow of liquid being processed by two main electric impulse discharges I and II with different clock frequencies provided preliminary ionization of gaseous medium. Discharge I is generated with frequency of impulses of positive and/or negative polarity of 10 Hz to 5 kHz, impulse duty cycle of 1% to 99 %, with average current strength up to 12 A and working voltage of 350 V to 2000 V , discharge II is generated with frequency of impulses of positive and/or negative polarity of 5kHz to 80 kHz , impulse duty cycle of 1% to 99 %, with average current strength up to 10 A and working voltage of 350 V to 2000 V, in form of impulse packets at the intervals between impulses of discharge I. Preliminary ionization is provided by preliminary ionization impulse and barrier electric discharges, or by one preliminary ionization impulse electric discharge and one barrier electric discharge. Device consists of reaction chamber with inlet and outlet for supply and discharge of liquid processed and with outlet to provide for vacuum conditions in gaseous medium, galvanically isolated electrodes "A" 27 and "B" 32 and connected to them power supply sources. Electrode «A» 27 is made in form of a pipe, the inner side wall of which is side wall of reaction chamber 1, and is assigned together with electrodes of opposite polarity for generation of combined impulse gas discharge and to form flow of processing liquid.

Electrode "B" 32 is designed in cylinder or barrel type form and coaxially fixed in respect to electrode «A 27» in reaction chamber 1, it is an electrode of opposite polarity in respect to electrode "A" and is assigned to generate combined impulse gas discharge and preliminary ionization impulse discharge. Proposed device may be equipped with additional electrode "C" 33 designed in form of "squirrel cage" or cage of cylinder or barrel form , placed inside reaction chamber1 over electrode «B» 32.

## Description

### Pertinent Art

The invention relates to the domain of water and aqueous solutions processing with low temperature plasma of gas discharge to provide for their decontamination from wide spectrum of contaminants and pollutants, disinfection from microbes of different nature or activation.

Principally, invention can be utilized for treatment of sewage waters from different sources, for drinking and technical water treatment. The invention can be also utilized for activation of chemically pure and potable water as well as aqueous solutions. Products resulted from this activation can be utilized in medicine, veterinary, in food , microbiological, cosmetic , mining and chemical industry and agriculture.

### Prior Art

There are a lot of known methods of processing water and aqueous solutions (aqueous medium) by influencing it with plasma of gas discharge, induced by electric discharge, for example: arc discharge (US 5464513), corona discharge (US 5549795, WO 98/09722), barrier discharge (RU 2136600, 2164499), high voltage discharge (RU 2152359) or glow discharge (RU 2043969, 2043970, 2043971, 2043972, 2043973, WO 02/058839, 02/059045). As result of such processing ions of O⁻, O₂⁻ O₃⁻ OH⁻ H₂O⁻, Hydrogen peroxide H₂O₂ and super oxide H₂O₃ are generated in aqueous medium. These reagents interact with substances and microbes, that are present in water and aqueous solutions. The cofactors are also photo effect and UV irradiation.

There is a known method of processing aqueous medium with plasma of gas discharge, induced by a series of pulsed electric arc discharges at a current strength of 30 A and a voltage of 10-50 kV (US 5464513), or by impulse electric discharges at a voltage of 10 kV in an oxygen-containing gas medium (RU 97117396), or by high voltage electric discharge at a voltage of 100-500kV, and the surface layer of fluid therewith serves as an electrode (RU 1311545).

Device for aqueous medium processing with plasma of gas discharge, induced by a series of impulse electric arc discharges (US 5464513), comprises of reaction chamber, equipped with apparatus to feed water being processed, with at least two electrodes arranged in the case thereof connected to high voltage source.

There is a known method of aqueous medium processing with plasma of gas discharge induced by electric corona discharge (JP, PN: 03181393, JP, PN: 62121695), however this method requires for its implementation high voltage no less than 3000 V.

Device for this method implementation (JP, PN: 03181393, JP, PN: 62121695) comprises of reaction chamber, equipped with apparatus to feed water being processed, with at least two planar electrodes horizontally fixed in the case thereof connected to high voltage source.

There is a known method of aqueous medium processing (WO 98/09722) with plasma of gas discharge, induced by electric corona discharge, generated above layer of liquid at voltage of 1to 20kV.

Device for this method implementation (WO 98/09722) comprises of reaction chamber, with at least two electrodes arranged in the case thereof, one of which is placed above the surface of treated liquid and is connected to a source of high voltage (1-20 kV) with a frequency of 200 kHz, and the other one is covered by fluid in the course of the process. Device is equipped with mean of feeding liquid being processed into reactor chamber and apparatus to provide vacuum inside the chamber.

There is a known method of aqueous medium processing (RU 2136600, 2164499) in running mode with plasma of gas discharge induced by electric barrier discharges generated with the help of high voltage electrodes with dielectric coating - electric insulation barrier.

Device for this method implementation (RU 2136600) comprises of reaction chamber , with means of formation and discharge of water-gas mixture arranged and electrode system in form of two manifolds lying opposite with electrodes furnished with dielectric barriers fixed in the case thereof. Electrodes of one of them are placed at 1-15 mm distance from electrodes of the other. Device is equipped with reaction camera inlet and discharge pipe branch for liquid.

Device for water processing with plasma of gas discharge induced by electric discharges in form of filaments (DE 4440813), comprises of reaction chamber, two electrically isolated from each other electrodes, one of which, that belongs to a gaseous atmosphere, is made as a plate, is provided with a dielectric and a cooling system and is connected to a source of high voltage (8-12 kV) with a frequency of 200 kHz, and the other one, that is covered by fluid in the course of the process, is grounded and presents the case. The device is provided with a means for feeding a treated fluid into the reaction chamber.
The closest prior art of the invention, that has been taken by us as prototype, is the method of aqueous medium treatment (WO 02/058839) in running mode with plasma of gas discharge induced by non self sustained glow discharge, produced above surface of fluid being processed at working current strength of 0,1-20A and voltage not exceeding 500V with clock frequency of 0,1-100kHz, duty cycle no less than 40 % and initiating voltage of impulse current of 2-10kV current strength of 30-5000mkA, with impulse duration of 0,01-20 mksec, with the use of unlike electrodes, one of which is submerged in the said treated fluid, and the electrode of reciprocal potential is in a gaseous atmosphere. During the treatment by non-self-maintained glow discharge the temperature in the discharge medium is maintained below the natural boiling point of the treated fluid, and the pressure is maintained at 30-250 Torr, magnetic field is applied and the said treated fluid is fed in a turbulent flow 0.5-5 mm in depth.

The said above method is implemented in closest prior art in the device for aqueous medium processing (WO 02/058838), that has been considered by us as prototype, that comprises of reaction chamber with at least two annular electrodes (internal and external) arranged coaxially with a clearance for initiation of the said non self sustained glow discharge, with magnets installed on the outside of the said reaction chamber opposite the internal electrodes.

The device is equipped with means for applying an electric potential to the said electrodes, which incorporates a source of an operating voltage and ionization (excitant) impulse voltage electrically connected with the said electrodes, means for feeding the said water solutions into said reaction chamber, and means of vacuum development inside the said reaction chamber and means for cooling the said above electrodes.

The common deficiency of methods and devices described above is in low efficiency of water solutions decontamination at high initial concentrations of contaminants and pollutants with wide variety of their assortment and types and inadequate degree (intensity) of decontamination at the said above conditions, herewith energy consumption per unit of water purified is relatively high.

Apart from that known methods and devices do not provide for guaranteed disinfection of water solutions from spore formed Bacteria and viruses.

Another serious limitation of some of methods and devices described above is in necessity of use of high voltage exceeding 500V, that is not safe for maintenance personnel and environment.

### Disclosure of the Invention

The main technical task of the invention is to increase efficiency of water (aqueous solutions) processing with plasma , that is to widen spectrum of simultaneously detoxified pollutants, contaminants and microbes, to increase degree of purification, to provide for effective purification and decontamination of aqueous solutions with high initial concentration of pollutants with simultaneous decrease of cost per unit of purified water and increase of efficiency of water activation and aqueous solutions, that is to increase of degree of changes and spectrum of modified and newly acquired properties, to enlarge durability (time life of properties acquired as result of activation) and stability of newly acquired properties towards external influence with simultaneous decrease of cost of activation per unit of activated water, as well as energy cost per unit.

The other task of the invention is to provide for ability to adjust and control of modified and/or newly acquired throughout activation physical, chemical and biological properties of water and aqueous solutions in wide range.

In order to resolve set above tasks according to the invention the method of water and aqueous solutions processing with plasma of gas discharge is proposed , that consists in the following: said above water(aqueous solution), arranged in form of a flow and bordering on gaseous medium, is simultaneously processed with entire complex of factors of combined impulse gas discharge, that is induced and maintained by two main electric impulse discharges of different clock frequencies provided preliminary ionization of said above gaseous medium.

Herewith, preliminary ionization of said above gaseous medium for maintenance of two main electric discharges is provided by: two preliminary ionization impulse electric discharges of single or two different clock frequencies, or two preliminary ionization barrier electric discharges of single or two different clock frequencies, or one preliminary ionization impulse electric discharge and one preliminary ionization barrier electric discharge of single or two different clock frequencies.

In preferred case one of the said above main electric discharges (Discharge 1) is formed with the clock frequency of working impulses of positive and /or negative polarity from 10 Hz to 5 kHz, impulse duty cycle from 1% to 99%, at the average discharge current strength of 12 A, working voltage from 350V up to 2000V , the other one of the said above main electric impulse discharges (Discharge 2) is formed with the clock frequency of working impulses of positive and /or negative polarity from 5kHz to 80 kHz , impulse duty cycle from 1% to 99%, at the average discharge current strength of 10 A, working voltage from 350V up to 2000V. Herewith electric Discharge 2 is made in form of pulse packet at the time interval between pulses of electric Discharge 1.

In preferred case said above preliminary ionization discharges are generated in frequency range from 10 Hz up to 250 kHz with voltage pulse duration no more, than 2 mksec, of positive and/or negative polarity, at a voltage from 3 kV up to 20 kV, and said above barrier discharges are generated at frequency band from 10 kHz up to 150 kHz, with voltage pulses of alternating polarity or alternating polarity with dominance of positive or negative polarity of duration no more, than 2 mksec , at a voltage from 3κV up to 25κV.

To provide for increase of efficiency of water processing, combined discharge and water being processed are additionally affected with magnetic field, alternating or steady, with magnetic induction of 0.01TI at least.

It is advisable to form the said above flow of liquid being processed with thickness from 0,3mm up to 3 mm provided, that the flow is turbulent, and to maintain pressure from 10 Torr up to atmospheric pressure in the said above gaseous medium.

It is also advisable to introduce air or other oxygen containing gas into water (aqueous solution) being processed, for example, by bubbling it through this liquid.

The set above tasks are also resolved according to the invention by proposed device for the implementation of the method of water and aqueous solutions processing with plasma of gas discharge, that consists of the following:
- a reaction chamber, with inlet and outlet for processed liquid feed and discharge, and outlet to provide for vacuum in gaseous medium,
- galvanic separated electrodes,
- one of the electrodes (Electrode "A"), is made in form of a pipe, the inner surface of which is the side wall of said above reaction chamber, and is assigned together with electrodes of opposite polarity to generate combined impulse gas discharge and to form a flow of said above liquid,
- the other electrode (Electrode "B"), at least one, is designed in a cylinder or barrel-type form and is coaxially fixed towards said above Electrode "A" within said above reaction chamber and is an electrode of opposite polarity for generation of combined impulse gas discharge and generation of preliminary ionization impulse discharge,
- power supply sources connected to the said above electrodes.
   Proposed device may be equipped with additional electrode( Electrode "C"), at least with one, made of electric conductors separately enclosed in dielectric barrier and connected to each other in form of "squirrel cage" or cage of a cylinder or barrel form and fixed within said above reactor chamber over Electrode "B", and further connected to additional power supply source. Herewith, Electrode "C" is an electrode of opposite polarity in respect to Electrode "B" to generate preliminary ionization barrier discharge.

In preferred case inner surface of said above Electrode "A" is specially processed, so as to increase wettability of the surface, and fixed with the provision to remove.

Electrode "A" can be made with coating of tantalum or molybdenum, or platinum, or iridium.

Electrode "A" can be made of metal resistant mainly to acidic and /or alkaline medium, for example: stainless steel or titanium, or ceramics with conductors placed on it's inner surface. Herewith, conductors of a linear or netlike, or spiral form may be made of corrosion resistant metals with low erosion , for example: of tungsten or molybdenum, or platinum; and placed along or across, or angularly lengthwise axis of said Electrode "A".

To ensure option of bubbling air or oxygen- containing gas into said above reaction chamber pores in wall of Electrode "A" are provided. Herewith, Electrode "A" is made of porous titanium or porous stainless steel, or porous ceramics with built- in conductors, and reaction chamber is made with external jacket placed at the external side of the chamber and fixed with option to remove.

Conductors built-in ceramics of Electrode "A" can be designed of linear or netlike, or spiral form and can be made of corrosion resistant metals with low erosion , for example: of tungsten or molybdenum, or platinum; and placed along or across, or angularly lengthwise axis of said Electrode "A".

In preferred case Electrode "B" is designed with edges or slots placed on it's lateral side surface uniformly, with smoothly rounded butt end, and made of refractory electro conductive material , for example: of tungsten or of tungsten carbide, or of similar material, and fixed at a distance of 3 mm up to 20 mm from Electrode "A".

In one of the cases of device implementation Electrode "C" is fixed with option to remove.

Dielectric barrier, where conductors of said above Electrode "C" are built-in, can be made, for example :of quartz or aluminum oxide, or titanium oxide, or tantalum oxide, or vitreous insulation, or similar material.

In one of the cases of device implementation the latter is equipped with arrangement in form of a heat exchanger, that provides for cooling of the said above Electrode "B" and equipment , that provides for feeding of cooling liquid to this heat exchanger, for example: transformer oil. Herewith, in preferred case Electrode "B" is placed directly at the heat exchanger.

The said above heat exchanger is made of a metal with thermal conductivity index of no less, than 200 W/mK°, for example: copper metal felt.

To provide for an option of forming turbulent flow of processing liquid the said above reactor chamber is equipped with arrangement designed in form of injectors placed in the upper part of the said above reactor chamber tangentially to inner surface of reaction chamber, in particular case at the angle of 70° to 88° relative to lengthwise axis of reaction chamber.

In particular case device is equipped with an arrangement to provide for imposing at least one magnetic field to the said above reaction chamber, that is designed in form of magnets placed outside the reaction chamber directly opposite Electrode "B" and fixed with option to remove.

The device can be also equipped with arrangement to impose steady or impulse magnetic field at the inlet to the said above reaction chamber with magnetic induction of at least 0,1 TI and direction of magnetic induction vector along or across vector of flow of said above liquid. The arrangement is designed in form of at least one magnet fixed outside reaction chamber with option to remove.

The essence of the invention is in the following: combined impulse gas discharge provides for generating and maintaining at the space between electrodes at consistently spaced discharge interspaces -zones above the surface of liquid (water or aqueous solutions) being processed low temperature plasma , that in it's turn affects flow of liquid being processed with all it's factors during transit of flow of liquid being processed through these zones.

In the process of forming of low temperature plasma by combined impulse gas discharge generation of ions , water molecules in exited state and secondary electrons take place in plasma, and thereupon generation of primary active particles-radicals OH*, H*, O* and N*, as well as solvated electrons and secondary active particles - stable axidant-Hydrogen peroxide H₂O₂, take place.

Apart from that , liquid being processed is affected by acoustic shock waves, struck of flow of charged particles, impact of electromagnetic irradiation at ultraviolet , visible, infra red and radiofrequency bands.

Herewith, generated chemically active particles may be accumulated in water or water solution, thus changing conductivity and other parameters of the latter, and chemical interaction of generated active particles leads to the changes of their properties in general. Depending on conditions of water processing and composition of water or water solution the impact of combined impulse gas discharge may lead to oxidation as well as to reduction of the components. The impact of combined impulse gas discharge leads to the changes in water cluster structure and energy structure of water and/or aqueous solution..

The proposed methods and device provides for the opportunity of selection of corresponding frequency characteristics of impact, that in it's turn provides for parametric character of gas discharge plasma interaction with polluted and/or contaminated water or aqueous solution, thus increasing efficiency of their processing.

The option of multi frequency and broadband impact on polluted and/or contaminated water or aqueous solutions provides for selective processing of different contaminants in the vicinity of their characteristic frequencies.

Simultaneous impact of all the factors of combined gas discharge on water or aqueous solutions being processed provides for establishing in the area of plasma-water interaction of primary conditions for behavior of chemical reactions and physical processes , that lead to the purification and decontamination of water and aqueous solutions, including such reaction and processes as :
- oxidation , reduction and hydration;
- chemical interaction of admixtures contained in water being processed with discharge interaction products;
- interaction of admixtures (including microbes) with irradiation in radio frequency(RF), infra red(IR), ultraviolet(UV) and visible frequency bands;
- interaction with shock acoustic waves and flow of charged particles;

Processing of water and aqueous solutions with plasma of combined gas discharge leads to the changes in water structure, it's clusters become smaller in size, simultaneously reaction capable particles are generated, such as ions of H, O, OH, ions of peroxide and super oxide compounds, Hydrogen peroxide and super oxide, atomic Oxygen e.t.c., as a rule in exited state, that makes liquid being processed (water or aqueous solution) become catalytic medium for behavior said above reactions.

Contaminants in result of interaction of polluted water or aqueous solutions with plasma of combined gas discharge either are transferred into insoluble or slightly soluble form, or are totally or partially destroyed, or form new non toxic compounds . Polluting compounds - Bacteria, viruses and Fungi are totally deactivated and their remnants destroyed.

The proposed method provides for effective purification of sewage waters of different origin , including industrial waste waters and municipal sewage waters , and post treatment of drinking (potable) water from heavy metals (including Fe, Mn, Al, Ag, Ni, As, Co, Cu, Pb, Zn, Mo, Sr, Ti, Va, Zr, Cd, Cr, Hg), radio nuclides, organic pollutants (organic substances of natural and synthetic origin , including petrochemicals e.t.c.), toxic substances, dioxins, surfactants , as well as provides for complete deactivation of Bacteria, Fungi and viruses present in water. Herewith, initial concentration of salts of alkali and alkali-earth metals, that are of crucial importance for vital activity of humans, animals and plant growth, is not practically changed in result of polluted water processing with plasma of combined gas discharge.

The proposed method is efficient at wide range of initial concentrations of pollutants and contaminants, as well as with wide variety of combinations of the latter.

The proposed method suits for purification and decontamination from contaminants with initial concentrations of several dozens grams per liter. Concentrations of pollutants in result of purification meet requirements of corresponding standards , that provides for discharge of purified water into open reservoirs, or reuse water in technological processes, and in case of post treatment of drinking water -meet standards on drinking(potable) water.

Usage of method of bubbling liquid (water or aqueous solutions) being processed with air or oxygen- containing gas throughout processing water with plasma seriously increases efficiency of oxidation processes of pollutants destruction and provides for increase of purification efficiency, for stability of plasma process, and increases generation of oxidants in water and/or water solutions including such as Hydrogen peroxide (H₂O₂.)

Impact of a steady or impulse magnetic field with magnetic induction of at least 0,01TI in the discharge zone provides for generating relatively uniform plasma throughout all reaction chamber, especially at high value of discharge current strength and increased pressure of gaseous medium , that results in efficiency increase of proposed method of plasma processing.

Processing of water or aqueous solutions in running mode with flow of liquid being processed in form of a thin film with thickness from 0,3mm up to 3mm, provided the flow is twisted in respect to lengthwise axis of reaction chamber, the body of which presents an electrode, and maintaining conditions of turbulence in the flow , also provides for increase of efficiency of proposed method of plasma processing.

Usage in proposed method of combined impulse gas discharge induced by two main electric impulse discharges of different clockwise frequencies, with preliminary ionization of gaseous medium by preliminary ionization impulse electric discharge or barrier discharge in the framework of integrated technological process and in the single reaction chamber, with the use of additional impact on the liquid being processed of a magnetic field and with bubbling this liquid with air or oxygen- containing gas provides for speedup of water and aqueous solutions processing in 2 and more times, with simultaneous decrease of effective total power consumption by more, than 1.5-2.5 times, that in turn provides for more effective and profound processing of aqueous medium in comparison to known prototypes.

Versatility of proposed method and device provides for changes of technical parameters of water and aqueous solutions processing in declared limits to get desired results without changes in basic technology and in design of device components.

This method provides for processing water and aqueous solutions of natural, anthropogenic, vegetable, animal and human origin with wide range and spectrum of their initial qualitative and quantitative parameters with a goal to decontaminate purify and activate them with high efficiency, that ensures:
- a possibility of reuse of purified water solutions in production, discharge into open reservoirs and municipal drainage and, in some cases, usage as potable water;
- a possibility of utilization of plasma activated water and aqueous solution in different areas of human activities such as: industry, agriculture, medicine, and pharmacology, support of vital activity and infrastructure maintenance, ecology e.t.c. ;
   Proposed method and device according to the invention can be used for:
- purification of water and aqueous solutions with contaminants and pollutants such as : organic and inorganic substances, heavy metals, fluorides, petrochemical products, radio nuclides, surfactants, pathogenic microbes;
- activation of water and aqueous solutions corresponding distilled water, bi-distilled and three-distilled water, drinking (potable) water, saline and technological solutions, water substances.

Proposed technological process is environmentally safe and does not require usage of any chemical reagents.

### Brief description of illustrations.

For better understanding of the invention examples of real implementation of the proposed method and device with references to illustrations attached are presented below, where:
**Fig. 1** illustrates block diagram of the device of water and aqueous solutions processing with plasma of gas discharge;
**Fig. 2** illustrates cross section of reaction chamber in line of A-A ( at the zone of combined impulse gas discharge and magnetic field provided bubbling of oxygen containing gas);

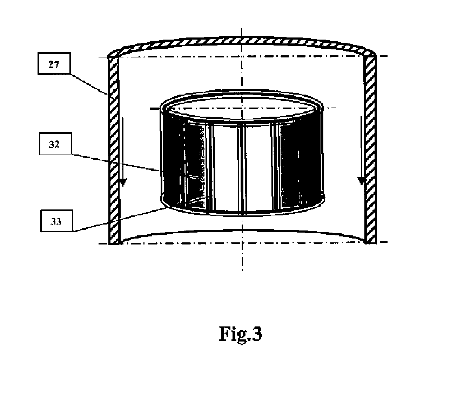

**Fig.3** illustrates drawing of electrodes of the reaction chamber in three-dimensional projection;
**Fig. 4** illustrates diagram of degree of light absorption in dependence of wavelength in the cell with activated water with optical path of 0,1cm (figures across the curve represent degree of water activation in relative units).
**Fig. 5** Illustrates diagram of the number of colony forming units of Bacteria strain **E. coli JM109** after impact of plasma activated water in dependence of period of impact.
**Fig.6** Illustrates diagram of number of microbes **Candida albicans** in test sample with activated water and in control sample in dependence of period of impact.

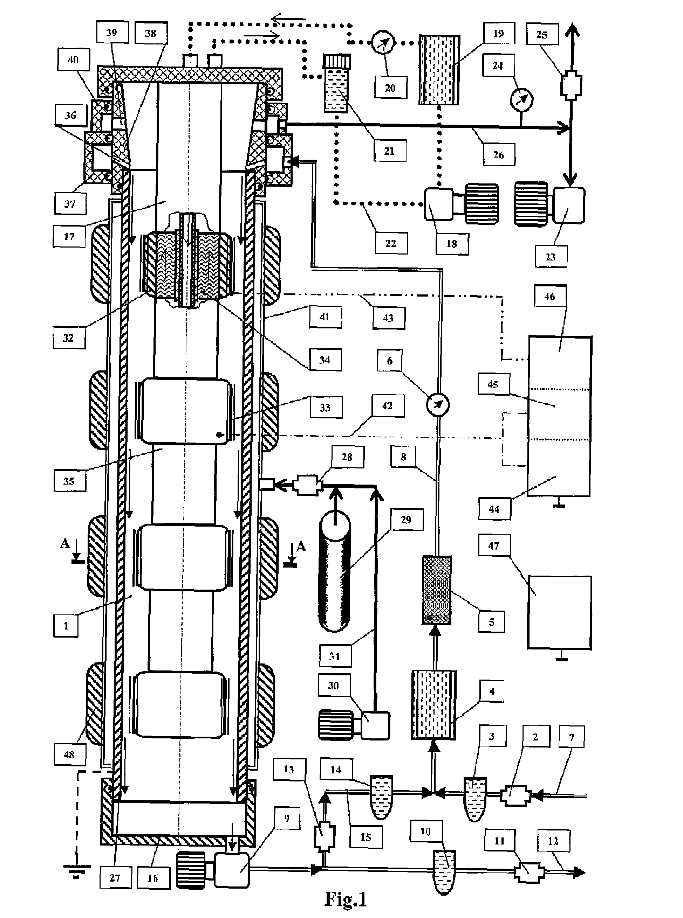

As described on attached drawings the device for water and aqueous solutions processing (hereinafter referred to as "liquid") with plasma of gas discharge (**Fig.1**) comprises of closed reaction chamber 1, filled with gaseous medium, for example : with air. Combined impulse gas discharge is induced in this reaction chamber 1 at prefixed and maintained pressure of gaseous medium. Liquid is processed with the help of this discharge. Liquid being processed is also affected with a steady or alternative (impulse) magnetic field and is bubbling with air or other oxygen- containing gas..

The arraignment, providing supply of liquid being processed into reaction chamber 1 at fixed temperature, consists of inlet electro valve 2, inlet mechanical filter of primary purification 3, heat exchanger 4, magnet 5, regulator of flow 6 with flow meter and connecting pipelines 7 and 8.

The other arraignment, providing discharge of processed liquid (water or water solution) from reaction chamber 1, consists of exhaust pump of solid type 9, outlet mechanical filter 10 of fine purification to purify processed water from coagulated suspension, outlet electro valve 11 and connecting pipeline 12.

In case of processing heavily polluted liquids and for the sake of achieving higher degree of decontamination cycling (multiple cycle) processing of liquids can be implemented in reaction chamber 1. A special arrangement is designed for this case, providing feeding of processed liquid from outlet into the inlet of reaction chamber 1, that consists of exhaust pump of solid type 9, intermediate electro valve 13, intermediate mechanical filter 14 of semi fine purification, heat exchanger 4, magnet 5, flow regulator 6 with flow meter , connecting pipelines 8, and pipeline 15.

Collection of liquid after processing in reaction chamber takes place in outlet collector 16.

Block of electrodes 17 is placed at reaction chamber 1.

The arrangement is assumed to provide for cooling of block of electrodes 17 of the reaction chamber 1, that consists of oil pump 18, heat exchanger 19, pressure controller 20, extensive tank 21 and connecting pipeline 22.

The arrangement, providing for vacuum in the reaction chamber 1, consists of vacuum pump 23, pressure controller 24, drain electro valve 25 and pipeline 26.

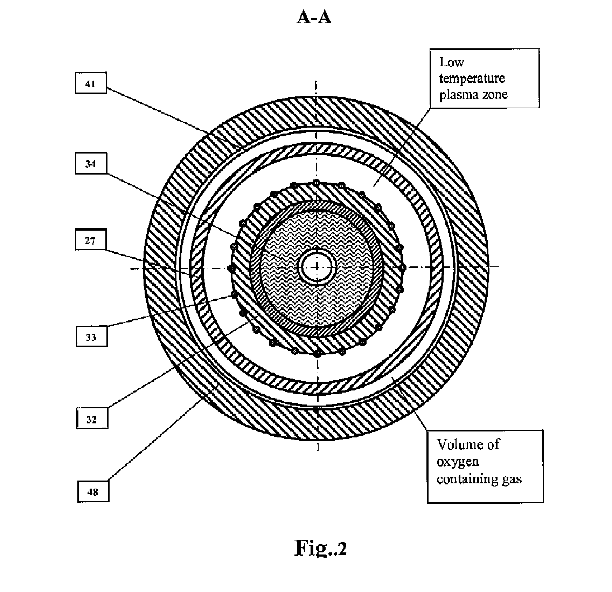

Reaction chamber 1 is designed in form of a closed type chamber (**Fig.1** and **Fig.2**) and is placed vertically.

Reaction chamber 1 comprises of a case in form of a pipe, installed with an option of easy removal. This pipe is an electrode "A" 27, and throughout processing it's inner surface is covered with liquid being processed.

Electrode 27 together with other electrodes of opposite polarity is designed for generation and maintenance of combined impulse gas discharge.

In particular cases of device implementation electrode 27 of the reactor chamber 1 is made with an inner diameter from 40 up to 200 mm, with height from 300 up to 1500mm. The wall of electrode 27 is at the same time side wall of said above reaction chamber 1 and is manufactured with special processing of inner surface, that provide for better wettability of the surface.

Electrode 27 is made of a material primary resistive towards acid and/or alkaline medium, for example: of stainless steel or titanium, or with coating of tantalum, or molybdenum, or platinum, or iridium. Electrode 27 can be made of ceramics with conductors placed on it's inner surface, made of corrosion resistant metal with low erosion , for example : of tungsten or molybdenum, or platinum. The said conductors can be designed in a linear, net-like or spiral form and placed along or across, or angularly to lengthwise axis of electrode 27.

Electrode 27can be made with pores for bubbling air or other oxygen-containing gas into the reaction chamber 1, for example: of porous titanium or porous stainless steel, or porous ceramics with built- in conductors. Herewith, material of electrode 27 is not to produce catalytic effect with processed liquid.

The arrangement for bubbling liquid being processed with air or oxygen-containing gas through pores of porous material , that electrode 27 is made of, consists of gate-type electro valve 28, vessel 29 with oxygen- containing gas at high pressure or compressor 30 and connecting pipeline 31.

Block of electrodes 17 consists of electrode "B" 32 , at least one, that is placed inside reaction chamber 1 coaxially to electrode 27 with spacing between them, in particular case of device implementation from 3 mm up to 20 mm, is of opposite polarity in respect to electrode 27and serves to generate and maintain two main electric impulse discharges and preliminary ionization impulse electric discharges.

Electrode 32 is designed in a cylinder or barrel-type form with edges or slots placed on it's backside surface uniformly, with smoothly rounded butt end, and made of a refractory electro conductive material , for example: of tungsten or of tungsten carbide, or similar material.

Electrode 32 can be also made with external surface of a refractory electro conductive material, for example: of tungsten, tungsten carbide or of similar material.

Another electrode "C" 33 , at least one, is made of conductors separately built in dielectric barrier and connected to each other in form of a "squirrel cage" or cage of cylinder or barrel form.

Electrode 33 is placed with option to remove above electrode 32.

Electrode 33 together with electrode 32 provides for generation of preliminary ionization barrier discharge. Said above dielectric barrier in which conductors of electrode 33 are built-in, is made, for example : of quartz or of aluminum oxide , or of titanium oxide, or tantalum oxide , or of vitreous insulation, or of similar materials.

All electrodes 27 "A", 32 "B", and 33 "C" are galvanic isolated from each other.

Block of electrodes 17 may consist of one or several electrodes 32 "B" and 33 "C".

Number of electrodes in reaction chamber 1 depends on preset volume of liquid to be processed per unit of time and/or on required degree of processing.

Device is equipped with an arrangement for cooling electrode 32, designed in form of heat exchanger 34, where electrode 32 is fixed at, with option of supplying this heat exchanger 34 with dielectric cooling liquid , for example: transformer oil.

Heat exchanger 34 is made of a metal with thermal conductivity index of no lee, than 200W/mK°, for example, copper metal felt.

Heat exchangers 34 are galvanic isolated between each other by dielectric hollow sleeves 35. Sleeves 35 are made of ceramics or heat resistant dielectric polymers.

Reaction chamber 1 comprises of an arrangement providing formation of turbulent and twisting in relation to electrode 27 axis flow of liquid and regulating it's thickness. The arrangement is designed in form of detachable injectors 36, made in it's turn of hard corrosion resistant materials or carbides and placed in the upper part of reaction chamber 1 tangentially to inner surface of reaction chamber 1 , in particular case, at the angle of 70° to 88° relative to lengthwise axis of reaction chamber 1. Injectors 36 are designed in accordance with provision of ratio of injector's length to its diameter to be no less, than 8:1.

Injectors 36 together with electrode 27 form and maintain continuous flow of liquid with thickness of 0.3 mm up to 3 mm on the inner surface of pipe 27.

Inlet collector 37 for uniform supply of liquid being processed to the injectors 36 placed at the outer side of the fixture 38 of reaction chamber 1 is provided in the arrangement.

Canals 39, designed in form of holes uniformly placed along the circle, are provided in fixture 38.

Gas collector 40, placed at the external side of fixture 38 of reaction chamber 1, is provided for creating and maintaining required vacuum in reaction chamber 1 of the device.

Reaction chamber 1 is equipped with external jacket 41 to provide for b feeding oxygen- containing gas into this chamber 1 throughout electrode 27, that is made of a porous material. Jacket 41 is fixed at external side of reaction chamber 1 with option to remove.

Electrode 27 is placed into fixture 38 and, as a rule, is provided with ground connection.

Electrode 32 is connected by conductor 42 with power supply sources 44 and 45, and electrode 33 is connected by conductor 43 with power supply source 46.

Power supply source 44 is provided for inducing of one or two main electric impulse discharges, power supply source 45 is provided for generating one or two preliminary ionization impulse electric discharges and power supply source 46 is provided for generating one or two preliminary ionization barrier discharges.

Control and management of the device in whole is provided by controller 47,connected to power supply sources 44,45 and 46, controllers 20 and 24, electro valves 2,11,13,25 and 28, and electrical motors (not shown in the drawings) of pumps 9, 18, 23 and compressor 30 ( links are not shown on Fig.1**).**

The device is equipped with magnets 48 of a ring shaped form, that are placed at the external side of electrode 27 opposite electrodes 32 with option to remove. Magnets 48 may be designed as split type.

In particular case of device implementation magnet 5 is installed at the inlet into reaction chamber 1 and is designed so as to provide for a steady or alternative (impulse ) magnetic field be applied with magnetic induction of no less, than 0.1 TI and direction of magnetic induction vector along or across of vector of motion of liquid being processed. Magnet 5 may be absent in the device.

To maintain temperature of liquid being processed below boiling point at fixed pressure maintained in reaction chamber 1 heat exchanger 4 is provided in the device.

The device operates as follows:

Control signals from controller 47 in accordance with specified program affect all executive means of the device.

In the inner volume of reaction chamber 1 vacuum of 10 Torr up to atmospheric pressure is created with the help of vacuum pump 23, gas collector 40, shut off valve 25,and pipe line 26. In other case of the device operating atmospheric pressure is maintained with the help of shut off valve only, herewith, gaseous medium is air.

Pressure is maintained by draining of electro valve 25.Control of specified pressure of gaseous medium in reaction chamber 1 is provided with the help of pressure controller 24.

Thereafter, pumping of cooling transformer oil is provided inside block of electrodes of gaseous medium 17 to cool electrode 32 with the help of heat exchanger 34 , with the help of oil pump 18 through heat exchanger 19, expansion tank 21 and pipe line 22, with pressure control in cooling system with the help of pressure controller 20. Heat exchanger 19 provides for cooling of transformer oil, thus enabling maintenance of stable low temperature plasma in reaction chamber 1 and maintaining temperature of water solution being processed below boiling point at specified pressure in reactor chamber 1.

Then, at control signal from controller 47 inlet electric valve 2 is opened and liquid being processed through inlet mechanical filter of primary purification 3, heat exchanger 4,magnet 5, flow regulator 6 with flow meter and pipe line 8 feeds into inlet collector 37 of reaction chamber 1. Heat exchanger 4 provides for maintenance of stable and decreased temperature of liquid being processed, especially at cyclic mode of processing.

With the help of injectors 36 thin film turbulent flow of liquid being processed twisted around lengthwise axis of electrode 27 is formed and maintained on the inner surface of electrode 27 with thickness of 0.3 mm up to 3 mm.

Within reaction chamber 1 liquid is processed with plasma of combined impulse gas discharge induced as follows:

A voltage is applied to electrodes 27 and 32 from power supply source 45 with the help of conductor 42 and preliminary ionization impulse electric discharge is generated.

In other variant of method implementation after application of voltage to electrodes 32 and 33 from power supply source 46 with the help of conductor 43 preliminary ionization barrier discharge is generated.

Then, after voltage from power supply source 44 through conductor 42 is applied to electrodes 27 and 32, two main electric impulse discharges of different clock frequencies are generated, that together with preliminary ionization discharges provide for and maintain combined impulse gas discharge within reaction chamber 1.

Impulses of current of one of the main impulse discharges are formed as pulse packets at the intervals (pause) between impulses of current of another said above impulse discharges.

In particular case of method implementation first of the said above main impulse electric discharges (**Discharge 1**) is formed with clockwise frequency of impulse succession of 10 Hz up to 5 kHz of positive and/or negative polarity, duty cycle of 1% up to 99 %, with average current strength in the discharge up to 12 A, working voltage from 350 V up to 2000 V, second of the said above main discharges (Discharge 2), is formed with clockwise frequency of impulse succession of 5 kHz up to 80 kHz of positive and/or negative polarity, duty cycle of 1% up to 99 %, with average current strength in the discharge up to 10 A, with working voltage from 350 V up to 2000 V ,herewith second electric discharge( **Discharge 2**) is formed as pulse packets at the intervals(pause) between impulses of **Discharge 1.**

Such terms of induction and maintenance of combined gas discharge in reaction chamber 1 provides for processing liquid with option to control process parameters, that is: intensity of processing and frequency parameters of effecting of each of all factors of combined gas discharge through variation of electric parameters of main and preliminary ionization discharges within preset range for each of main electric impulse discharges. Design of proposed device provides for establishment of different discharge parameters at different reaction zones of reaction chamber 1.

Simultaneously with processing liquid in reactor chamber 1 with combined impulse gas discharge it is possible to bubble liquid being processed with air or other oxygen containing gas through pores of porous material of electrode 27 covered over all it's inner surface with film of running flow of liquid being processed. Preliminarily, oxygen- containing gas under pressure is fed from tank 29 or from compressor 30 into jacket 41. Oxygen- containing gas is fed through electro valve 28, pipeline 31 and fills volume of jacket 41 at prefixed pressure.

In addition to factors of combined impulse gas discharge induced in reaction chamber 1 it is possible to affect liquid being processed with a steady or alternating (impulse) magnetic field produced by magnet 48.

Processed liquid drains down the inner surface of electrode 27 into outlet collector 16, from where it is fed into mechanical filter of fine purification 10 with the help of exhaust pump of solid type 9 for extraction of insoluble, semi soluble, absorbed and coagulated sludge, then it is fed into electro valve 11 and through pipe line 12 indo discharge.

When high degree of liquid purification is required to remove complex pollutants , that are difficult to disintegrate, and in case when high parameters of activation of water and aqueous solutions are required, liquid is processed in cycling mode. For that already processed in reaction chamber 1 liquid is returned for repeated processing into inlet collector 37 of reaction chamber 1 with the help on exhaust pump of solid type 9, through electro valve 13, intermediate mechanical filter of semi fine purification 14, heat exchanger 4, magnet 5, flow regulator with flow meter 6 through pipeline 8. This process can be repeated manifolds.

Liquid being processed can be additionally affected with a magnetic field with the help of magnet 5, placed at the inlet into reaction chamber 1.

Liquid processed in the way described above is provided to customers.

### Embodiments of invention implementation.

### Embodiment # 1.

The goal of embodiment described below is to present capability of implementation and efficiency of the method of water decontamination from heavy metals with plasma of combined gas discharge.

To verify efficiency of water purification method water solution was taken with pH=6.9 contaminated with ions of metals with the following initial concentration: Fe²⁺=192mg/l, Pb²⁺=0,32mg/l, Hg²⁺=0,14mg/l, Cd²⁺=0,29mg/l, Cr⁶⁺=69mg/l, Ni²⁺=24mg/l, Mo⁴⁺=13mg/l and Co⁴⁺=19mg/l (total concentration of heavy metals is 317,75mg/l).

Purification of the solution was accomplished in proposed device for water and aqueous solutions purification with plasma of gas discharge that provides for proposed method implementation (**Fig.1**).

In particular case of device implementation the letter consists of reactor chamber 1 with electrodes 27 and 32, power supply sources 44 and 45, controller 47, magnet 5, an arrangement to create vacuum in reaction chamber 1, comprising of vacuum pump 23, pressure controller 24, drain electro valve 25 and pipe line 26, an arrangement to cool electrodeb32 in form of a heat exchanger 34, with option to feed dielectric cooling liquid, for example: transformer oil, an arrangement to feed solution being processed into reaction chamber 1, that consists of inlet electro valve 2, inlet mechanical filter of prime purification 3,heat exchanger 4, magnet 5, flow regulator 6 with flow meter, and connecting pipe lines 7 and 8, and an arrangement , providing discharge of processed solution from reactor chamber 1, comprising of an exhaust pump of solid type 9,outlet mechanical filter of fine purification 10 to purify processed liquid from coagulated suspensions, outlet electro valve 11 and connecting pipeline 12.

Herewith, electrode 27 of reaction chamber 1 is made of stainless steel with inner diameter of approximately 98 mm, of height about 950 mm, with spacing of electrodes 27 and 32 equal 8 mm, there are 4 electrodes 32, magnet 5 is made with provision to provide magnetic field at the inlet to reaction chamber 1 with magnetic induction of 0.2 TI, and gaseous medium is of atmospheric air.

To provide for purification of the solution in the inner volume of reaction chamber 1 vacuum with pressure of remaining air of 50 Torr was created with the help of vacuum pump 23, gas collector 40, electro valve 25pipe line 26 and was maintained with drainage of electro valve 25 and pressure controller 24. Then electrode 32 was cooled with the help of heat exchanger 34, as was described above in section of description of device operation, that facilitates maintenance of stable low temperature plasma in reaction chamber 1 and temperature of liquid being processed below boiling point at fixed pressure in reaction chamber 1.

Next, upon control signal of controller 47 inlet electro valve 2 was opened to provide for feeding solution being processed through mechanical filter of prime purification 3, heat exchanger 4, magnet 5, flow regulator with flow meter 6 and pipe line 8 into inlet collector 38 of reactor chamber 1.

Thin film turbulent flow of liquid being processed with thickness of about 0.65 mm twisted relative to the axis of electrode 27 was formed and maintained on the inner surface of electrode 27 with the help of injectors 36.

In reaction chamber 1 solution being processed was affected with plasma of combined impulse gas discharge , that was induced in a way described above (in section of description of device operation).

Parameters of the discharge throughout processing were as follows:
1) Main impulse electric discharge I: frequency of impulses of current - 440Hz, impulse duty cycle-25%; preliminary ionization was provided by electric impulse discharge with clock frequency of 18 kHz and impulse duration of 1 mksec.
2) Main impulse electric discharge II: frequency of impulses of current - 24kHz, impulse duty cycle-25%; preliminary ionization was provided by electric impulse discharge with clock frequency of 120 kHz and impulse duration of 0.3 mksec.

Impulses of discharge II were generated in form of pulse packets in the intervals (pause) between impulses of discharge I. Polarity of impulses of all the discharges in relation to electrode 27 was positive. Average current strength im main discharges I and II was 1,65A. Working voltage of discharge I was -415V, of discharge II -430V. Working voltage of preliminary ionization discharges was - 5κV.

Discharge of processed solution was accomplished from outlet collector 16 with the help of exhaust pump 9, mechanical filter of fine purification 10, electro valve 11 and pipe line 12.

After processing of contaminated solution in accordance with proposed method residual concentrations of metals in processed solution were in accordance with data of analytic measurements as follows: Fe²⁺= 10mkg/l, Pb²⁺=3mkg/l, Hg²⁺=1mkg/l, Cd²⁺=1mkg/l, Cr⁶⁺=28mkg/l, Ni²⁺=5mkg/l, Mo⁴⁺=15mkg/l, Co⁴⁺=6mkg/l (Totally: 69mkg/l).

Thus , embodiment of method of water solutions processing with plasma of gas discharge demonstrates higher efficiency of water purification from heavy metals than prototype method WO02/058839 embodiment 1 and analogs WO02/058838 embodiment 1, WO02/058452 embodiment 4,notably:
- simultaneous decontamination of wider spectrum of pollutants , in particular, simultaneous decontamination from 8 pollutants, though such highly toxic pollutants as Pb²⁺, Hg² 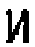 Cd²⁺, in comparison to said above analog where as reported no more than 5 pollutants were successfully decontaminated;
- ability of water solution processing with higher initial concentrations of contaminants, thus total initial concentration of contaminants in the solution was of 317,75mg/l, when in analog description it was reported of successful purification of water solution with initial concentration of pollutants no more than 105,8mg/l. Therefore , efficiency of proposed method exceeds analog efficiency more than three times by this parameter;
- higher degree of solution purification, thus total residual amount of metals in the solution processed in accordance with proposed method was 69mkg/l, when in analog description residual (final) concentration of pollutants of 153 mkg/l was reported, Therefore, residual contamination of solution in case of proposed method implementation is three times lower, than in case of analog implementation. Residual contamination of solution in case of proposed method implementation meets requirements of World Health Organization (WHO) towards drinking (potable) water, when residual concentration of pollutants in solution purified in accordance with method analog meets WHO requirements towards water to be discharged into open reservoirs.

Moreover, power consumption in case of proposed method implementation is two times lower than in case of analog method implementation.

Therefore , presented embodiment confirms, that proposed method implemented with the help of proposed device provides for high efficiency purification of sewage waters in industrial applications from inorganic substances, including toxic heavy metals.

### Embodiment # 2.

The goal of embodiment presented below is to demonstrate capability of realization and efficiency of method of polluted water decontamination with plasma of gas discharge from organic substances in particular petrochemical products.

To verify efficiency of purification method water polluted with unleaded gasoline with additives of MTBE (methyl-tert-butyl-ether) with concentration of gasoline about 10 ml of gasoline per liter of water (total concentration of pollutant -1g/l) was processed .

Polluted water , to be more precise - water gasoline emulsion, was processed in proposed device (**Fig. 1**) , particular case of it's implementation is described above in Embodiment # 1, with exception that, it is additionally equipped with electrodes 33, power supply source 46 and magnets 48.

In this case electrode 27 of reaction chamber 1 is made of porous stainless steel with inner diameter about 98 mm, height of about 950 mm, spacing between electrodes 27 and 32 of 10 mm , electrodes 33 are fixed in slots of electrode 32, there are four of each of electrodes 32 and 33 , magnets 48 are made with provision of creating in the reaction chamber 1 magnetic field with magnetic induction of 0,02TI, magnet 5 is made with provision of creating at the inlet of the reaction chamber 1 magnetic field with magnetic induction of 0,2TI, it was atmospheric air as gaseous medium , water during processing in addition was bubbling with oxygen.

As it is described in the Embodiment #1 vacuum conditions with pressure of remaining air in the inner volume of reaction chamber 1 300 Torr was created.

Electrode 32 was cooled and twisted turbulent flow of liquid being processed with thickness of about 0.65 mm was formed and maintained as described in embodiment #1.

Apart from that oxygen was fed into jacket 41 with the help of tank of oxygen 29, electro valve 28, pipeline 31, as described in section of device operation, bubbling of liquid being processed with oxygen was provided.

In reaction chamber 1 polluted water was processed with plasma of combined gas discharge induced and maintained by two main electric impulse discharges with preliminary ionization of gaseous medium.

Parameters of discharge throughout processing were as follows:
1) main impulse electric discharge **I** with frequency of impulses of 460Hz, impulse duty cycle of 50%, preliminary ionization was provided by barrier discharge with frequency of 20kHz and preliminary ionization impulse duration of 1 mksec;
2) main impulse electric discharge **II** with frequency of impulses of 22 kHz, impulse duty cycle of 50%, preliminary ionization was provided by barrier discharge with frequency of 70kHz and preliminary ionization impulse duration of 0.5 mksec;

Impulses of main discharge **II** were generated in form of pulse packages in the intervals (pause) between impulses of main discharge **I.** Polarity of impulses **I** and II of main electric discharges in respect to electrode 27 was positive, polarity of impulses of preliminary ionization barrier discharges in respect to electrode 27 with dominance of positive polarity.

Average current strength in discharges **I** and **II** was of 5A. Working voltage of discharge **I** was 500V, of discharge **II** was 515V. Working voltage of preliminary ionization discharges was 8κV.

Discharge of processed water was provided as described in Embodiment # 1.

Detailed data on concentrations of main pollutants before and after processing are presented in Table 1. In whole control of concentrations of 250 organic substances was implemented.

As it can be seen from Table 1, in result of processing initial polluted water with plasma of combined gas discharge in accordance with proposed method concentration of practically all pollutants in final product (processed water) did not exceed permitted concentrations set forth by Federal standards of USA for drinking (potable) water.

Thus, proposed method of processing aqueous solutions with plasma of gas discharge provided the following:
- efficient decontamination from broader spectrum of pollutants including such pollutants as MTBE with higher initial concentrations of contaminants in initial solution. Thus, total initial concentration of pollutants in the initial solution was 1g/l, and in prototype - WO02/058839, Embodiment 6 was 246,5Mg/l;
- higher degree of purification So, residual concentration of pollutants in accordance with data of analytic measurements was 67 mkg/l, and in prototype was 4.5 mg/l;
- power consumption was 2,54κW/h per m³, and in prototype was 3,84κW/h per m³, that is three times lower, than for prototype.

**Table 1.**

| Name of pollutant | Maximum permitted for drinking water(USA) mkg/l | Polluted (initial) solution (mkg/l) | Purified solution (mkg/l) |
|---|---|---|---|
| Benzene | 5 | 12800 | BLD* |
| n-Butilbenzene | not determined | 360 | BLD** |
| Ethylbenzene | 700 | 5700 | BALD* |
| Izopropylbenzene | not determined | 270 | BLD* |
| MTBE | 70 | 90400 | 67 |
| Naphthalene | 20 | 1100 | BLD* |
| Toluene | 1.000 | 31300 | BLD* |
| M,p -Xylenes | 10.000 | 19400 | BLD* |
| o-Xylene | 10.000 | 8600 | BLD* |
| 1,2,4-Trimethil benzene | not determined | 7200 | BLD* |
| 1,3,5-Trimethil benzene | not determined | 2000 | BLD* |
| Dibromofluore ethane (%SR) | | 107 | BLD* |
| 1, 2-Dichlorethane-d4 (SR%) | | 112 | BLD* |
| Toluene d8 (SR%) | | 111 | BLD* |
| Total Hydrocarbons (mg/l) | 300 | 312 | BLD* |

| | | | |
|---|---|---|---|
| *) BLD- below limit of detection. | | | |

Therefore, proposed method implemented with the help of proposed device may find wide application for high efficient purification of industrial waste and municipal sewage from organic substances, including petrochemical products.

### Embodiment # 3.

The goal of embodiment presented below is to demonstrate capability of implementation and efficiency of polluted liquids processing with plasma of combined gas discharge in application to sea water contaminated with petrochemical products.

To verify efficiency of sea water from petrochemical products sea water contaminated with gasoline and diesel fuel in proportion of about 10 ml of pollutant per liter of sea water. Salinity of sea water was of 27.6 g/l, and pH=6,11.

Polluted water, to be more precise, water gasoline emulsion was processed in proposed device (**Fig.1****,** particular case of it's implementation was described above in the Embodiment # 2 with exception that number of electrodes 32 and 33 in this particular case is two of each.

In this case electrode 27 of reaction chamber 1 is made of stainless steel with inner diameter of about 98 mm, with height of about 950 mm, spacing between electrodes 27 and 32 0f 10 mm, electrodes 33 are fixed at the slots of electrode 32, atmospheric constituted gaseous medium. In the inner volume of reaction chamber vacuum conditions with pressure of air of 350 Torr was created and maintained as it is described in Embodiment # 1.

Electrode 32 was cooled, twisted turbulent flow of liquid being processed with thickness of 0.66 mm was formed and maintained as described above in embodiment # 1.

There was no bubbling of liquid being processed with oxygen.

In reaction chamber 1 water being processed was affected with plasma of combined impulse gas discharge , that was induced and maintained in reaction chamber 1 by two main impulse electric discharge with preliminary ionization

Parameters of the discharge were as follows:
1) Maim impulse electric discharge **I** was with frequency of impulses of 420Hz, impulse duty cycle was 25%, preliminary ionization was provided by barrier electric discharge with frequency of 19κHz and impulse duration of 1mksec;
2) Maim impulse electric discharge **II** was with frequency of impulses of 20kHz, impulse duty cycle was 25%, preliminary ionization was provided by barrier electric discharge with frequency of 70 κHz and impulse duration of 0.5 mksec.

Impulses of main electric discharge **II** were generated in pulse packages in the intervals (pause) between impulses of main electric discharge **I**. Polarity of impulses of main electric discharges **I** and **II** in respect to electrode 27 was positive, polarity of impulses of preliminary ionization barrier discharges in respect to electrode 27 with dominance of positive polarity. Average current strength in discharges **I** and **II** was 7A. Working voltage of main discharge **I** was of 345V, of main discharge **II** -360V. Working voltage of preliminary ionization discharge was 4κV.

Detailed data on concentrations of main pollutants in sea water before and after processing are presented in Table 2. In whole control of concentrations of 250 organic substances was implemented.

**Table 2.**

| Name of pollutant | Maximum permitted concentration for surface waters (USA) (mkg/l) | Sea water polluted with gasoline, (mkg/l) | Sea water purified from gasoline, (mkg/l) | Sea water polluted with diesel fuel, (mkg/l) | Sea water purified from diesel fuel, (mkg/l |
|---|---|---|---|---|---|
| Benzene | 710 | 4100 | 86 | 198 | 84 |
| n-Butil benzene | | BLD* | BLD* | 210 | BLD* |
| sec-Butilbenzene | | BLD* | BLD* | 130 | BLD* |
| Ethylbenzene | 29000 | 2800 | 18 | 140 | BLD* |
| MTBE | 3000-4000 | 7800 | 720 | 7.4 | BLD* |
| Naphtalene | 7100 | 310 | BLD* | 690 | BLD* |
| Toluene | 1000 | 14100 | 180 | 150 | 130 |
| m,p Xylenes | | 8700 | BLD* | 550 | BLD* |
| o-Xylene | | 4000 | BLD* | 280 | 17 |
| Machine oil # 2 (mg/l) | | BLD* | BLD* | 470 | BLD* |
| Gasoline (mg/l) | | 23 | BLD* | BLD* | BLD* |

| | | | | | |
|---|---|---|---|---|---|
| *) BLD- below limit of detection. | | | | | |

As it can be seen from Table 2 in result of initially polluted sea water with plasma of combined gas discharge in accordance with proposed method

Concentration of practically all pollutants in final product ( purified sea water) did not exceed maximum permitted concentrations , set forth by federal USA standards for discharge water into open reservoirs.

Thus , proposed method of processing sea water with plasma of gas discharge has demonstrated high efficiency of saline water purification from petrochemical products.

Method-analog WO02/058838 and method-prototype WO02/058839 do not report on the ability to purify sea water.

Therefore, proposed method implemented with the help of proposed device may find wide application for high efficient purification of sea waters polluted with petrochemical products.

### Embodiment # 4.

The goal of embodiment presented below is to demonstrate capability of implementation and efficiency of liquids processing with plasma of combined gas discharge from surface active substances (surfactants).

For purification water with pH=6,5 contaminated with non ionogenic surfactant "Syntanol DC -10" with initial concentration of 1360mg/l.

Contaminated water was processed in proposed device (**Fig. 1**), particular case of implementation thereof was described above in Embodiment # 2 with exception , that number of electrodes 32 and 33 was 3 of each in this case., Vacuum with air pressure of 300 Torr in the inner volume of reaction chamber 1 was created and maintained as described in Embodiment # 1.

Combined impulse gas discharge was induced and maintained in reaction chamber 1 by two impulse electric discharges with preliminary ionization. 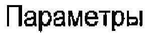 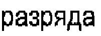 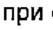 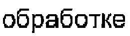 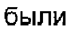 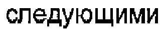 :
1) Main impulse electric discharge **I** was with frequency of impulses of 500 Hz, impulse duty cycle was 30 %, preliminary ionization was provided by barrier electric discharge with frequency of 20 κHz and impulse duration of 1 mksec;
2) Main impulse electric discharge **II** was with frequency of impulses of 30 kHz, impulse duty cycle was 30 %, preliminary ionization was provided by barrier electric discharge with frequency of 90 κHz and impulse duration of 0.5mksec.

Impulses of main electric discharge **II** were generated in pulse packages in the intervals (pause) between impulses of main electric discharge **I.** Polarity of impulses of main electric discharges **I** and **II** in respect to electrode 27 was positive, polarity of impulses of preliminary ionization barrier discharges in respect to electrode 27 with dominance of positive polarity. Average current strength in discharges **I** and **II** was 3.3 A.

Working voltage of main discharge **I** was of 510V, of main discharge **II** - 530V. Working voltage of preliminary ionization discharge was 5κV.

In result of processing water polluted with surfactants by proposed method the following was provided :
- high degree of purification ,notably residual concentration of the surfactant in accordance with data on analytic measurements **I** n the purified solution was below limit of detection;
- efficient decontamination of water from surfactant with high initial concentration of the latter. Thus total concentration of polluting surfactant in initial solution was 1360mg/l, in prototype- WO02/058839 Embodiment 5 and analog - WO02/058838 Embodiment 5 was 500 mg/l, that is efficiency of purification of proposed method by this parameter is more than two times higher than efficiency of said above analogs. Apart from that power consumption in case of proposed method do not exceed power consumption in case of said above analogs.

Therefore, proposed method implemented with the help of proposed device provides for high efficiency of water purification from surfactants in industrial applications and in municipal engineering.

### Embodiment # 5.

The goal of embodiment presented below is to demonstrate ability of implementation and efficiency of method liquid disinfection with plasma of combined gas discharge from pathogen Bacteria in high concentration , spore forming Bacteria and viruses.
1. For verification water contaminated with Bacteria colibacillus *(****E*.*****Coli**)*, yeast-like fungi*(**Candida albicans**)*, golden staphylococcus (***S.aureus***) blue pus bacillus (***P.aeruginosa***). Required level of contamination with microbes was achieved by method of serial dilution of suspension.

Disinfection of the solution with 10⁷cell/ml of each of said above microbe strains was implemented in proposed device (**Fig.1**), particular case of it's implementation was described above in Embodiment # 4, with exception , that magnets 5 and 48 were absent in the case.

Electrode 27 of reaction chamber 1 is made with inner diameter of about 98 mm, with height of about 950 mm, spacing between electrodes 27 and 32 was 6 mm, as gaseous medium atmospheric air was used.

For solution disinfection in reaction chamber 1 air pressure equaled to atmospheric pressure was provided with the help of electro valve 25, pipe line 26 as described in Embodiment # 1.

Electrode 32 was cooled , twisted turbulent flow of liquid being processed with thickness of about 1.4 mm was formed and maintained as described in Embodiment # 1.

In reaction chamber 1 solution being processed was affected by plasma of combined impulse gas discharge , that was induced and maintained in reaction chamber 1 by two main impulse electric discharges with preliminary ionization.

Parameters of the discharge throughout processing were as follows:
1) Main impulse electric discharge I was induced with frequency of current impulses of 3 kHz, impulse duty cycle was 25 %, preliminary ionization was provided by barrier electric discharge with frequency of 24 κHz and impulse duration of 0.7 mksec:
2) Main impulse electric discharge **II** was induced with frequency of current impulses of 35 kHz, impulse duty cycle was 25 %, preliminary ionization was provided by barrier electric discharge with frequency of 120 κHz and impulse duration of 0.3mksec.

Impulses of main electric discharge **II** were generated in pulse packages in the intervals (pause) between impulses of main electric discharge **I.** Polarity of impulses of main electric discharges **I** and **II** and polarity of impulses of preliminary ionization barrier discharges in respect to electrode 27 was positive and negative.

Average current strength in main discharge I was 2,5A, and in main discharge **II** -5A.

Working voltage of main discharge **I** was of 645V, of main discharge **II** - 650V. Working voltage of preliminary ionization discharge was12κV.

Neutralizer ( 1 ml of 10% sterile solution of Sodium thiosulphite) was introduced into water solution after processing. In 5 minutes after neutralization serial ten fold dilutions were made and seeded into corresponding for each microbe strain nutrient medium. Disinfection results were evaluated by presence or absence of bacteria clumps on the surface of dense nutrient mediums.

Data on the results of processing contaminated water ware presented in Table 3.

**Table 3.**

| Test culture | Number of viable cells per ml | | |
|---|---|---|---|
| | Before processing | Average current strength 2,5A | Average current strength 5A |
| Bacteria colibacillus ***E.Coli*** | 2,5* 10⁷ | not detected | not detected |
| Yast-like fungi ***Candida albicans*** | 1,9* 10⁷ | not detected | not detected |
| Golden staphylococcus ***S.aureus*** | 1,5* 10⁷ | 9,2* 10² | not detected |
| Blue pus bacillus ***P.aeruginosa*** | 2,98* 10⁷ | not detected | not detected |

2. For verification water contaminated with spores of spore forming Bacteria *-**B.cereus*** was taken. Examinations were conducted with concentration of microbes of about 10⁵ cell/ml.

Disinfection of the solution was implemented in propose device (**Fig. 1**), particular case of it's implementation was described in paragraph 1 of the same embodiment except, that there were 4 of each of electrodes 32 and 22 installed.

Formation and maintenance of twisted turbulent flow of liquid being processed were provided as described in Embodiment # 1, except that thickness of the liquid flow was around 0.8 mm.

In reaction chamber 1 water being processed was affected by plasma of combined impulse gas discharge, that was induced and maintained in reactin chamber 1 by two main impulse electric discharges with preliminary ionization

Parameters of the discharge were as follows:
1) Main impulse electric discharge **I** was induced with frequency of current impulses of 2 kHz, impulse duty cycle was 50 %, preliminary ionization was provided by barrier electric discharge with frequency of 20 κHz and impulse duration of 1 mksec;
2) Main impulse electric discharge **II** was induced with frequency of current impulses of 20 kHz, impulse duty cycle was 50 %, preliminary ionization was provided by barrier electric discharge with frequency of 60 κHz and impulse duration of 0.5mksec.

Impulses of main electric discharge **II** were generated in pulse packages in the intervals (pause) between impulses of main electric discharge **I**. Polarity of impulses of main electric discharges **I** and **II** and polarity of impulses of preliminary ionization barrier discharges in respect to electrode 27 was positive and negative.

Average current strength in main discharge **I** was 5A, and in main discharge II -12A. Working voltage of main discharge **I** was of 645V, of main discharge **II** - 650V. Working voltage of preliminary ionization discharge was12κV.

Evaluation of efficiency of disinfection of water contaminated with spores was made immediately after processing and in one hour after processing keeping water without introducing neutralizers. Data on the results of disinfection are presented in Table 4.

**Table 4.**

| Test culture | Number of spores in 1 ml of processed water | | | |
|---|---|---|---|---|
| | Before processing | Average current strength (A) | Immediately after processing | In one hour after processing |
| Spore culture ***B.cereus*** | 2_{,}8* 10⁵ | 5 | 2,9* 10¹ | not detected |
| | | 12 | not detected | not detected |

3. For verification water contaminated with virus was taken. Virus strain of poliomyelitis (*Sabin 4Sc*) was taken as test culture. As initial virus with titer . B 10^{7,36} TCD₅₀/ml was taken. To reach required concentration of virus in water (10⁵ TCD ₅₀/ml) virus containing suspension was diluted in water.

Disinfection of water was implemented in proposed device (**Fig.1**) described above in o paragraph 2 of this Embodiment.

Twisted turbulent flow of liquid being processed with thickness of about 0.8 mm was formed and maintained as it was described above in Embodiment # 1.

In reaction chamber 1 liquid being processed was affected by plasma of combined impulse gas discharge , that was induced and maintained in reaction chamber 1 by two impulse electric discharges with preliminary ionization.

Parameters of the discharge throughout processing were as follows:
1) Main impulse electric discharge **I** was induced with frequency of current impulses of 2 kHz, impulse duty cycle was 50 %, preliminary ionization was provided by barrier electric discharge with frequency of 20 κHz and impulse duration of 1 mksec;
2) Main impulse electric discharge **II** was induced with frequency of current impulses of 20 kHz, impulse duty cycle was 50 %, preliminary ionization was provided by barrier electric discharge with frequency of 60 κHz and impulse duration of 0.5mksec.

Impulses of main electric discharge **II** were generated in pulse packages at the intervals (pause) between impulses of main electric discharge **I**. Polarity of impulses of main electric discharges **I** and **II** and polarity of impulses of preliminary ionization barrier discharges in respect to electrode 27 was positive and negative.

Average current strength in main discharge **I** was 5A, and in main discharge **II** -12A. Working voltage of main discharge **I** was of 645V, of main discharge **II** - 650V. Working voltage of preliminary ionization discharge was12κV.

Next, samples of contaminated water processed at different value of current strength of 6A and 12 A were taken with adding to them sterile solution of Sodium thio sulphite In 5 minutes after neutralization serial ten fold dilutions of each sample were prepared and used to contaminate test cell culture. Period of contact of contaminated samples with cell test culture was one hour. After contact cells were washed with Henck's solution and embedded with supporting medium (without serocity). Preliminary record of results was made on 5-7 -th day, final record was made in three weeks period.

Data on the results of water processing are presented in Table 5.

**Table 5.**

| Test culture | Amount of virus, Ig TCD₅₀/ml | | Average current strength in discharge (A) |
|---|---|---|---|
| | before processing | after processing | |
| Virus strain of poliomyelitis of Type 1 | 5,19 | 0,43 | 6 |
| | 5,26 | not detected | 12 |

Hereby, proposed method of aqueous solutions with plasma of gas discharge provided the following:
- more efficient decontamination from pathogenic Bacteria, spore forming Bacteria, viruses and Fungi , then method-prototype (WO02/058839 ,embodiment 8) and analog (WO02/058838 embodiment 4),in particular: provided disinfection of contaminated water from broader spectrum of microbes, including Blue pus bacillus *P.aeruginosa*, spore forming Bacteria, and virus of poliomyelitis;
- deactivation of microbes with their initial concentration at least ten times higher , than in case of method analog and with lower final concentration of microbes in processed water in case of proposed method;
- high output of deactivation process in comparison to analogs;
- power consumption in case of proposed method for deactivation of 1m³ of contaminated water is 2,5 times lower , than in cases of said above analogs.

Thus, proposed method implemented with proposed device may find wide application for high efficient decontamination and disinfection of municipal sewage.

### Embodiment # 6.

Bi-distilled water was activated with plasma of combined impulse gas discharge in accordance with proposed method , then size of water clusters was measured with the help of laser correlation spectroscopy method ( Spectroscopy of optical bias and correlation of photons. G.Kammins, A.Pike, Mir, Moscow. 1978; T. Allen. Particle Size Measurement; Chapman & Hall. 4th Edition, 1992).

Activation of water was implemented in proposed device (**Fig.1**), particular case of it's implementation was described in Embodiment #1 with exception , that there were six electrodes 32 installed.

Air pressure in the inner volume of reaction chamber 1 fixed at 20 Torr was created as it was described in Embodiment # 1.

Electrode 32 was cooled, supply of water being processed and discharge of processed water, forming and maintaining of twisted turbulent flow of water being processed with thickness of about 0.65 mm was provided as described in Embodiment # 1. ,

In reaction chamber 1 solution being processed was affected with plasma of combined impulse gas discharge , tha was induced at the following parameters:
1) Main impulse electric discharge **I** was induced with frequency of current impulses of 2 kHz, impulse duty cycle was 50 %, preliminary ionization was provided by impulse electric discharge with frequency of 20 κHz and impulse duration of 2 mksec;
2) Main impulse electric discharge **II** was induced with frequency of current impulses of 20 kHz, impulse duty cycle was 50 %, preliminary ionization was provided by impulse electric discharge with frequency of 120 κHz and impulse duration of 0.3mksec.

Impulses of main electric discharge **II** were generated in pulse packages at the intervals (pause) between impulses of main electric discharge **I**.

Polarity of impulses of all electric discharges in respect to electrode 27 was positive.

Average current strength in main discharge **I** and in main discharge **II** was 20A. Working voltage of main discharge **I** was of 630V, of main discharge **II** -650V. Working voltage of preliminary ionization discharges was 4κV.

After activation water was filtered with filters "Millipore" with calibrated pores of 0.2 mkm in dust-free box. Spectrums of laser correlation dispersion of plasma activated water were taken at angle 90° in respect to He-Ne laser beam. Correlaton function was processed with software Dinils (Alango Co.),that uses method of inverse problem to find effective sizes of "admixtures" (T. Allen. Particle Size Measurement; Chapman & Hall. 4th Edition, 1992.). Through optimization on three different periods of signal accumulating software provided definite presence of particles with sizes of about 0,35nm, that corresponds to 1-2 molecules of water per cluster. Control measurements of spectrums of initial filtered bi-distillate did not shown any particles at all.

In view of the fact, that particles or other formation of the type registration was close to the limit of measurement precision with such configuration of spectrum registration, spectrum measurements were repeated with device described in the A.D. Lebedev et all " Laser correlation spectroscopy in biology", Naukova Dumka, Kiev, 1987, p. 53, that provided registration of correlation spectrums at the angle of 12°, that lead to increase of measurements precision by 50 times.

In this particular case bottled drinking water with salinity of 700 mg/l and pH -7,85, was used as initial water , that was activated in the same way as it was described in this Embodiment for activation of bi-distilled water, that was further filtered and it's correlation function of laser dispersion processed.

Results of processing laser correlation spectrums of bottled drinking water definitely shown particles presence with the size of 0,34-0,35nm.

Size of particles was not changed after freezing and consequent unfreezing of activated water. The particles of the same size were detected when control spectrums were registered in 90 days period.

This facts prove, that serious changes in cluster structure of water takes place after it's activation with plasma of combined gas discharge, this changes are stable in time and in part towards external impact..

As result of activation of water with the help of method analog WO 02059046 the average cluster size 2-3 times larger.

Apart from changes in cluster structure plasma activated water is characterized by substantial changes in energy structure of water molecules stable in time and in part stable toward external influence. The following embodiment illustrates and confirms these changes.

### Embodiment # 7.

Bottled drinking water with salinity of less than 700 mg/l and ph =7.6 was activated with plasma of combined impulse gas discharge in accordance with proposed method, then light absorption in activated and initial water was measured in visible UV spectrum range.

Water was activated with the help of proposed device (**Fig.1**), particular case of it's implementation was described in Embodiment # 6. Air pressure of 30 Torr was created in the inner volume of reaction chamber 1 as described in Embodiment # 1.

Electrode 32 was cooled, supply of water being processed and discharge of processed water , formation and maintenance of twisted turbulent flow with thickness of 0.55 mm was provided as described in Embodiment # 1.

In reaction chamber 1 solution being processed was affected by plasma of combined impulse gas discharge , that was induced at the following parameters of the discharge:
1) Main impulse electric discharge **I** was induced with frequency of current impulses of 1 kHz, impulse duty cycle was 50 %, working voltage was of 515 V, preliminary ionization was provided by impulse electric discharge **I** with frequency of 30 κHz and impulse duration of 1 mksec, working voltage was of 3 kV;
2) Main impulse electric discharge **II** was induced with frequency of current impulses of 20 kHz, impulse duty cycle was 50 %,working voltage was of 525 V, preliminary ionization was provided by impulse electric discharge **II** with frequency of 120 κHz and impulse duration of 0.3mksec, working voltage was of 3 kV.

Impulses of main electric discharge **II** were generated in pulse packages at the intervals (pause) between impulses of main electric discharge **I**.

Polarity of impulses of all electric discharges in respect to electrode 27 was positive.

Average current strength in main discharge **I** and in main discharge **II** was 20A.

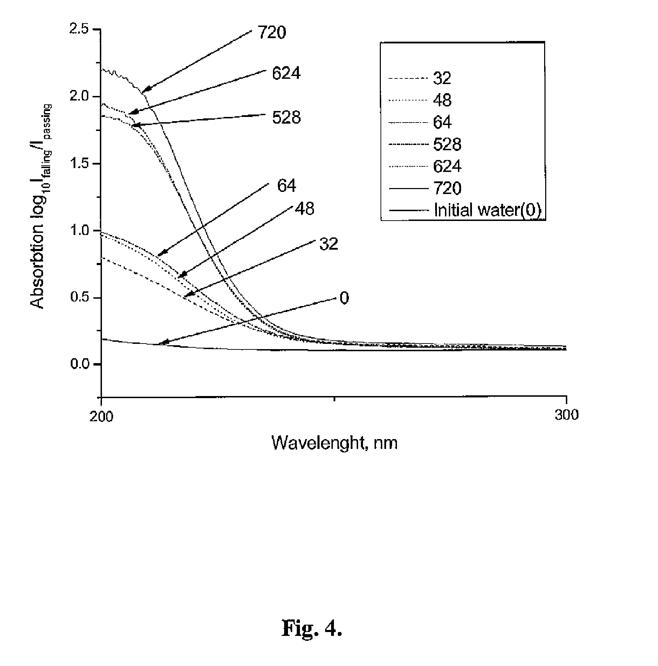

To record spectrums of absorption of water processed with plasma UV Spectrophotometer "Specord M-40" made by Karl Zeis Co., with interface to register spectrums with personal computer (PC) in digital form. All spectrums were measured in the same standard quartz cell with optical absorbing path of 0.1 cm. Absorption in plasma activated water( with different degree of activation ) is shown on Fig 4 in dependence of wavelength.

Wavelength of falling light is shown at X-axis in nanometers, logarithm of ratio of Intensity of falling light to intensity of passing light is shown at Y-axis. 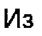 From data presented in **Fig.4** it is may be seen , that plasma activated water depending of degree of activation at maximum point of absorption spectrum in specified wavelength band absorbs from 3.8 up to 100.9 times more than initial water. In control experiments of absorption spectrums measurements after 90, 180, 270 and 360 days after water activation obtained results were practically the sane , discrepancies were less than 2 %. Specified peculiarities of absorption spectrums of activated water remain also after cycle of freezing and consequent unfreezing , as well as after bringing to the boiling point.

This proves, that energy structure of water substantially changes after activation with plasma of combined impulse gas discharge and these changes are stable in time and toward external impact.

### Embodiment # 8.

The goal of the embodiment presented below is to demonstrate capability and efficiency of antibacterial, anti viral and anti fungi properties of water activated with plasma of combined impulse gas discharge..

Bottled drinking water with salinity of less than 700 mg/l and pH= 7.6 was taken as initial product.

Water was activated with the help of proposed device (**Fig.1**), particular case of it's implementation was described in Embodiment # 6.

Air pressure of 30 Torr was created and maintained in the inner volume of reaction chamber 1 as described in Embodiment # 1.

Electrode 32 was cooled, supply of water being processed and discharge of processed water, formation and maintenance of twisted turbulent flow of water being processed with thickness of 0.55 mm was provided as described in Embodiment # 1.

Solution being processed was affected with plasma of combined impulse gas discharge in reaction chamber 1, induced with the following parameters:
1) Main impulse electric discharge **I** was induced with frequency of current impulses of 1 kHz, impulse duty cycle was 50 %, preliminary ionization was provided by impulse electric discharge with frequency of 20.5 κHz and impulse duration of 1 mksec;
2) Main impulse electric discharge **II** was induced with frequency of current impulses of 20.5 kHz, impulse duty cycle was 50 %, preliminary ionization was provided by impulse electric discharge with frequency of 120 κHz and impulse duration of 0.3mksec.

Impulses of main electric discharge **II** were generated in pulse packages at the intervals (pause) between impulses of main electric discharge **I.**

Polarity of impulses of all electric discharges in respect to electrode 27 was positive.

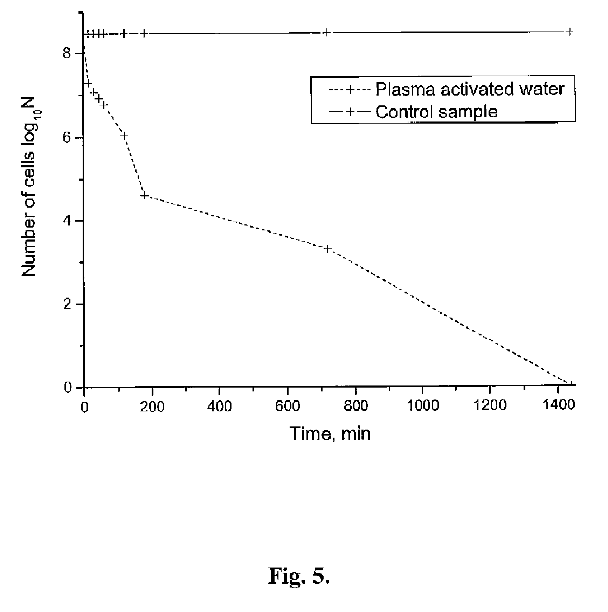

Average current strength in main discharge **I** and in main discharge **II** was 18A. Working voltage of main discharge **I** was of 525 V, of main discharge **II** - 550V. Working voltage of preliminary ionization discharges was 4κV.
A. Antibacterial properties of water activated with plasma of combined impulse gas discharge were explored with bacterial strain ***E.Coli.*** as an example.
   The bacterial culture was grown overnight in L broth (10 g Tryptone, 5 g Yeast Extract, 5 g NaCl / liter) at 37°C with aeration. To obtain a fresh culture, the overnight culture was diluted 1:100 in 10 ml L broth (125 ml flask) and grown with aeration for 3-4 hours at 37°C (to OD₆₀₀ = ∼0.5 - 1.0).
   A 100 µl sample of Standard Culture of *E. coli* JM109 (OD = 1.0) was added to 9.9 ml activated water (or normal water), mixed, and incubated at room temperature (22°C). Samples of 100 µl were taken after various lengths of time, and serial 1:10 dilutions were made in sterile saline. 100 µl samples of each dilution were spread onto L agar plates, incubated overnight, and then colonies were counted to determine colony forming units (CFUs).
   Results of calculation of colony forming Bacteria in control sample and in the sample with activated water are presented in **Fig.5**. As results from these data plasma activated water showed high efficiency in killing ***E. coli*.** strain.
B. Anti fungi properties of water activated with plasma of combined impulse gas discharge were explored with yeast like fungi ***Candida albicans*** as an example.

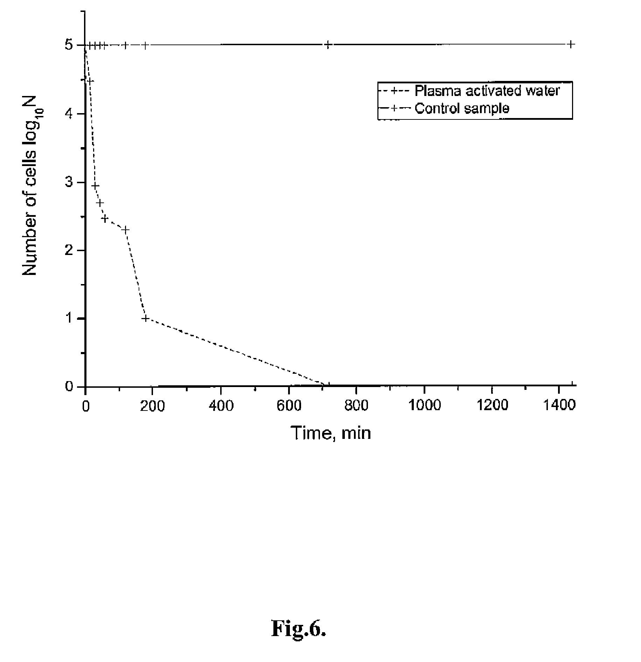

Broth with 10⁵ cell/ml of specimens of ***Candida albicans*** was prepared. 100µl sample of this culture was added into 9,9 ml of plasma activated water (or initial water -control sample), mixed and incubated at room temperature (22°C). 100µl samples were taken at fixed time intervals, diluted in sterile saline solution at the ratio of 1:10. 100µl were samples were placed in Petri dishes with L-agar,were incubated overnight, then number of specimens was determined. Data of calculations of number of specimens of ***Candida albicans*** in the sample of plasma activated water and control sample is presented in Fig 6. Time of exposure of plasma activated water on sample of culture of *Candida **albicans,*** is shown at X-axis, number of specimens of ***Candida albicans*** in logarithm scale is shown at Y-axis. From presented data it is clear , that activated water depressed growth of ***Candida albicans*** totally.
B. Anti viral properties of water activated with plasma of combined impulse gas discharge were explored with virus of poliomyelitis (strain ***Sabin 4Sc***).as an example.

As initial virus with titer . B 10^{7,36} TCD₅₀/ml was taken. To reach required concentration of virus in water (10⁵ TCD ₅₀/ml) virus containing suspension was diluted in plasma activated water and initial water (control sample).

Samples of contaminated solutions were taken at time intervals of 15, 30, 45, 60 and 120 minutes , adding into it sterile solution of Sodium thiosulphite. In 5 minutes after neutralization serial ten fold dilutions of each sample were prepared, test culture was contaminated with these probes. Culture of cells of grivet kidneys 4647 served as test culture. Period of contact of examined probes with test culture was 1 hour. After contact cells were washed with Henk's solution and embedded with supporting medium. Medium, that consists of medium IGLA MAM and medium 199 at ratio 1:1 with addition of antibiotics (Penicillin and Streptomycin, 50 units/ml each) served as supporting medium. Then, titer of virus in the probes was measured. Probes with virus in initial water (not activated water) served as control probes. Results obtained are presented in. Table 6.

**Table 6.**

| Time of impact of activated water on virus | Initial product | 15 min | 30 min | 45 min | 60 min | 120 min |
|---|---|---|---|---|---|---|
| Virus amount (IgTCD₅₀/ml) | 5,19 | 4,15 | 2,13 | 1,36 | 0,43 | 0,00 |

As it is clear from presented data plasma activated water totally inactivates virus of poliomyelitis in contact with them pending one hour.

This embodiment proves , that water activated with plasma of combined gas discharge possesses efficient anti bacterial, anti fungi and anti viral properties.

In comparison to that efficient anti viral properties of activated water in respect to poliomyelitis virus (strain ***Sabin 4Sc***)are not reported in analog (WO02/059046, Embodiment 5), as far as Bacteria ***E.Coli*** and yeast like fungi ***Candida albicans*** are concerned , properties to inhibit these microbes of activated water processed in accordance with proposed method are 10-100 times higher than for analog case properties all other conditions being equal.

### Embodiment # 9.

The goal of the embodiment presented below is to demonstrate ability of implementation and efficiency of method to decontaminate water solution from Tetrachlorethane (PCE) with plasma of combined gas discharge.

Waste water with pH=6,65 containing pollutants as presented in Table 7 was taken for purification.

Processing of water was accomplished in the same way as described in Embodiment # 3 except for air pressure in the inner volume of reaction chamber 1 was maintained at the level of 125 Torr.

Combined impulse gas discharge was induced and maintained in reaction chamber 1 by two impulse electric discharges with preliminary ionization. Ionization was provided by preliminary ionization electric impulse discharges and preliminary ionization barrier discharges.

Parameters of the discharge throughout processing were as follows:
1) Main impulse electric discharge **I** was induced with frequency of current impulses of 480 Hz, impulse duty cycle was 35 %, preliminary ionization was provided by barrier electric discharge with frequency of 20 κHz and impulse duration of 1 mksec;
2) Main impulse electric discharge **II** was induced with frequency of current impulses of 28 kHz, impulse duty cycle was 35 %, preliminary ionization was provided by impulse electric discharge with frequency of 120 κHz and impulse duration of 0.5mksec.

Impulses of main electric discharge **II** were generated in pulse packages at the intervals (pause) between impulses of main electric discharge **I**.

Polarity of impulses of main electric discharges **I** and **II** in respect to electrode 27 was positive. Polarity of impulses of preliminary ionization electric discharge in respect to electrode 27 was positive, polarity of impulses of preliminary ionization barrier electric discharges in respect to electrode 27 -with dominance of positive polarity.

Average current strength in main discharge **I** was of 4A and in main discharge II was 3A. Working voltage of main discharge I was of 540 V, of main discharge **II** -550V. Working voltage of preliminary ionization electric impulse discharge was 9κV and preliminary ionization barrier electric discharge was of 3.5 kV.

Detailed data on pollutants concentrations before and after treatment are presented in Table 7.

**Table 7.**

| Name of pollutants | maximum permitted concentrations for drinking water (USA) mkg/l | Contaminated solution (mkg/l) | Purified solution (mkg/l) |
|---|---|---|---|
| MTBE | 70 | 340 | 1,8 |
| Tetrachlorethane (PCE) | 5 | 8.500 | 3,8 |
| Trichlorethene (TCE) | 200 | 430 | BLD* |

| | | | |
|---|---|---|---|
| *) BLD-below limit of detection. | | | |

As it can be seen from data presented in Table 7 in result of initial waste water processing with plasma of combined gas discharge in accordance with proposed method concentrations of all pollutants in final product (processed water) did not exceed maximum permitted concentrations set forth by USA Federal standards for drinking ( potable) water.

Method-analog (WO02/058838) did not reported on the ability to purify water from Tetrachlorethane (PCE).

Therefore, proposed method implemented with the help of proposed device may find wide applications in highly efficient decontaminating of industrial waste waters from Tetrachlorethane (PCE) and may be utilized in chemical industry.

### Industrial usability.

Hereby, presented embodiments of real implementation confirm, that proposed method is feasible, in particular case with the help of proposed device..

Proposed method in comparison to known method-prototype WO 02/058839 provides for the following:
- to widen spectrum of simultaneously neutralized pollutants and contaminating substances and microbes;
- to increase degree of aqueous medium purification; capability of processing aqueous mediums with high initial concentration of pollutants with simultaneous decrease of cost per unit of water processed.

In comparison to known method-analog WO 02/059046:
- to increase efficiency of water and aqueous solutions activation, that is to increase degree and to widen spectrum of modified and newly acquired properties, as well as to increase time life of features acquired in result of activation and their stability towards external impactswith simultaneous decrease of per unit cost , including cost of energy consumption per unit of activated water.

It is obvious , that proposed method can be implemented with the help of not only proposed device.

It is also clear, that terminology and phraseology used in this particular description is not to be considered as limiting.

Though, present invention is fully disclosed, including disclosure through particular cases of it's implementation, it is assumed , that invention can be modified and present patent application is not obliged to take into consideration all variations, utilization variants or changes of present invention in accordance with principles of invention as a whole and including deviations from stipulated in this application , that result from acknowledged and common practice, utilized in the art , which this invention belongs to, and applicable to the main features of the invention described above and articles of patent formula attached below.

## Claims

1. **A method of water and aqueous solution processing with plasma of gas discharge,** that comprises off said above liquid made in form of a flow and bordering on gaseous medium is simultaneously affected by entire complex of factors of plasma of combined impulse gas discharge induced and maintained by two main electric impulse discharges of different clock frequency providing preliminary ionization of said above gaseous medium is implemented.

2. **A method as claimed in claim 1 ,wherein** preliminary ionization of gaseous medium to maintain two main electric impulse discharges is implemented with two preliminary ionization impulse electric discharges of single or two different clock frequencies or with two preliminary ionization barrier electric discharges of single or two different clock frequencies or with one preliminary ionization impulse electric discharge and with one preliminary ionization barrier electric discharge of single or two different clock frequencies.

3. **A method as claimed in claim 1 ,wherein** one of the said above impulse electric discharges (Discharge 1) is formed with clock frequency of impulses of positive and/or negative polarity from 10Hz to 5 kHz, impulse duty cycle of 1 % to 99 %, with average current strength in discharge up to 12 A, with working voltage of 350 V to 2000 V, the other of said above main impulse electric discharges (Discharge II) is formed is formed with clock frequency of impulses of positive and/or negative polarity from 5kHz to 80 kHz, impulse duty cycle of 1 % to 99 %, with average current strength in discharge up to 10 A, with working voltage of 350 V to 2000 V, herewith is formed electric discharge II is formed as pulse package at the time interval between impulses of electric discharge 1.

4. **A method as claimed in claim 2 ,wherein** said above preliminary ionization electric impulse discharges are generated in frequency band of 10 kHz to 250 kHz, with voltage impulse duration no more ,than 2 mksec ,of positive and/or negative polarity, with voltage of 3kV to 20 kV.

5. **A method as claimed in claim 2 ,wherein** said above barrier electric discharges are generated in frequency band of 10 kHz, to 150 kHz, with voltage impulse duration no more ,than 2 mksec ,of alternating polarity, with voltage of 3kV to 25 kV.

6. A method as claimed in claim 5, wherein said above barrier electric discharges are generated with domination of positive or negative polarity (amplitude).

7. **A method as claimed in claim 1 ,wherein** combined impulse gas discharge and liquid is additionally affected with magnetic field, steady or impulse with magnetic induction value at least of 0.001 TI.

8. **A method as claimed in claim 1 ,wherein** said above flow of liquids formed with thickness of 0.3 to 3 mm providing turbulence condition remains.

9. **A method as claimed in claim 1, wherein** to atmospheric pressure is maintained in said above gaseous medium.

10. **A method as claimed in claim 1 ,wherein** air or other oxygen containing gas is introduced into said above liquid is by bubbling.

11. **A device for water and aqueous solutions processing with plasma of gas discharge,** that consists of:
- reaction chamber, with inlet and outlet for processed liquid feeding and discharge and outlet to provide for vacuum in gaseous medium,
- galvanically separated electrodes,
- one of the electrodes (Electrode "A"), is made in form of a pipe, the inner surface of which is the side wall of said above reaction chamber, and is designed together with electrodes of opposite polarity to generate combined impulse gas discharge and to form a flow of said above liquid.
- the other electrode (Electrode "B"), at least one, is designed in cylinder or barrel-type form and is coaxially fixed towards said above Electrode "A" within said above reaction chamber , is an electrode of opposite polarity for generation of combined impulse gas discharge and generation of preliminary ionization impulse discharge.
- power supply sources connected to the said above electrodes.

12. **A device as claimed in claim 11, wherein** it is equipped with additional electrode (Electrode "C"), at least one, made of electric conductors separately enclosed in dielectric barrier and connected to each other in form "squirrel cage" or cage of cylinder or barrel form and fixed within said above reactor chamber over Electrode "B", and further connected to additional power supply source. Herewith, Electrode "C" is an electrode of opposite polarity in respect to Electrode "B" to generate preliminary ionization barrier discharge.

13. **A device as claimed in claim 11, wherein** said above electrode "A" is installed with option to remove.

14. **A device as claimed in claim 11, wherein** inner surface of the said above electrode "A" is specially processed so as to increase wettability of the surface.

15. **A device as claimed in claim 11, wherein** said above electrode "A" is made of metal resistant mainly to acidic and /or alkaline medium, for example: stainless steel, or titanium.

16. **A device as claimed in claim 11, wherein** said above electrode "A" is made with coating of tantalum or molybdenum or platinum or iridium

17. **A device as claimed in claim 11, wherein** said above electrode "A" is made of ceramics with conductors placed on it's inner surface.

18. **A device as claimed in claim 17, wherein** said above conductors are made of corrosion resistance metals with low erosion, for example: of tungsten or molybdenum or platinum.

19. **A device as claimed in claim 17, wherein** said above conductors are made of linear or netlike or spiral form and are placed along or across or angularly lengthwise axis of said above electrode "A".

20. **A device as claimed in claim 11, wherein** said above electrode "A" is made with pores to bubble air or other oxygen containing gas into said above reaction chamber.

21. **A device as claimed in claim 20, wherein** said above electrode "A" is made of porous titanium or porous stainless steel or porous ceramics with built in conductors.

22. **A device as claimed in claim 11, wherein** said above electrode "B" is made with or slots placed on it's lateral side uniformly with smoothly rounded butt end.

23. **A device as claimed in claim 11, wherein** said above electrode "B" is fixed in respect to electrode "A" with spacing of 3 mm to 20 mm.

24. **A device as claimed in claim 11, wherein** said above electrode "B" is made of refractory conductive material, for example: of tungsten or of tungsten carbide or of similar material.

25. **A device as claimed in claim 12, wherein** said above electrode "C" is installed with option to remove.

26. **A device as claimed in claim 12, wherein** said above dielectric barrier, where conductors of conductors of said above electrode "C" are built in is made of , for example: of quartz or aluminum oxide or titanium oxide or tantalum oxide or vitreous insulation or similar material.

27. **A device as claimed in claim 12, wherein** it is equipped with arrangement in form of heat exchanger, that provides for cooling of said above electrode "B" and arrangement , that provides for supply of cooling liquid, for example: transformer oil, herewith electrode "B' is fixed at this heat exchanger.

28. **A device as claimed in claim 27, wherein** said above heat exchanger is made of material with thermal conductivity of no less than 200W/mK°, for example, of copper metal felt.

29. **A device as claimed in claim 11, wherein** said above reaction chamber is equipped with y external jacket for supply of air or other oxygen containing gas into this chamber, placed at the external side of the chamber with option to remove , herewith electrode "A" is made of porous material.

30. **A device as claimed in claim 11, wherein** said above reaction chamber is equipped with arrangement providing for formation of turbulent flow of said above liquid made in form of injectors placed in the upper part of said above reaction chamber tangentially to inner surface of reaction chamber.

31. **A device as claimed in claim 30, wherein** said above injectors are placed at the angle of 70°to 88° relative to lengthwise axis of reaction chamber.

32. **A device as claimed in claim 11, wherein** it is equipped with arrangement to provide for imposing at least one magnetic field to the said above reaction chamber , that is made in form of magnets placed outside the directly opposite electrode "B" with option to remove.

33. **A device as claimed in claim 11, wherein** it is equipped with arrangement to impose steady or impulse magnetic field with magnetic induction of at least 0,1TI and direction of magnetic induction vector along or across vector of flow of said above liquid, made in form of at least one magnet fixed outside reaction chamber with option to remove.
